(19) Europäisches Patentamt
European Patent Office
Office européen des brevets

(11) EP 4 521 305 A1

(12) EUROPÄISCHE PATENTANMELDUNG

(43) Veröffentlichungstag:
12.03.2025 Patentblatt 2025/11

(21) Anmeldenummer: 23196203.6

(22) Anmeldetag: 08.09.2023

(51) Internationale Patentklassifikation (IPC):
G06N 5/01 (2023.01)      G06N 20/00 (2019.01)
H04L 41/14 (2022.01)

(52) Gemeinsame Patentklassifikation (CPC):
G06N 5/01; G06N 20/00; H04L 41/145; H04L 41/16

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Siemens Aktiengesellschaft
80333 München (DE)

(72) Erfinder:
• Blenk, Andreas
86916 Kaufering (DE)
• Reisacher, Marco
81669 München (DE)

(74) Vertreter: Siemens Patent Attorneys
Postfach 22 16 34
80506 München (DE)

(54) **VERFAHREN ZUM BESTIMMEN EINER NETZWERKUMGEBUNG FÜR EINE INFRASTRUKTURUMGEBUNG MITTELS EINES PLANUNGSSYSTEMS, COMPUTERPROGRAMMPRODUKT, COMPUTERLESBARES SPEICHERMEDIUM SOWIE PLANUNGSSYSTEM**

(57) Die Erfindung betrifft ein Verfahren zum Bestimmen einer Netzwerkumgebung (10) für eine Infrastrukturumgebung (32) mittels eines Planungssystems (28), mit den Schritten:
- Vorgeben von benötigten Anwendungen (20) in der Infrastrukturumgebung (32), wobei die Anwendungen (20) auf maschinellen Lernen basieren, mittels einer elektronischer Recheneinrichtung (30) des Planungssystems (28);
- Vorgeben eines jeweiligen maschinellen Lernmodells (22) für eine jeweilige Anwendung (20) mittels der elektronischen Recheneinrichtung (30);
- Durchführen einer jeweiligen Datenanalyse für ein jeweiliges maschinelle Lernmodell (22) mittels der elektronischen Recheneinrichtung (30), wobei mittels der Datenanalyse eine Qualität des maschinellen Lernmodells (22) in Abhängigkeit von jeweiligen Eingangsdaten für das maschinelle Lernmodell bestimmt wird; und
- Bestimmen der Netzwerkumgebung (10) in Abhängigkeit von der Datenanalyse auf Basis eines Optimierungsverfahrens mittels der elektronischen Recheneinrichtung (30).

Ferner betrifft die Erfindung ein Computerprogrammprodukt, ein computerlesbares Speichermedium sowie ein Planungssystem (28).

FIG 1

EP 4 521 305 A1

**Beschreibung**

Die Erfindung betrifft ein Verfahren zum Bestimmen einer Netzwerkumgebung für eine Infrastrukturumgebung mittels eines Planungssystems gemäß dem geltenden Patentanspruch 1. Ferner betrifft die Erfindung ein Computerprogrammprodukt, ein computerlesbares Speichermedium sowie ein Planungssystem.

Bei heutigen Industriestandorten, Fabriken beziehungsweise Infrastruktureinrichtungen ist zu beobachten, dass sich diese von isolierten zu dienstleistungsorientierten Produktionsplattformen hin entwickeln. Neue Technologien, wie zum Beispiel Videokameras, intelligente Sensoren oder Cloudifizierung, treiben diesen Wandel voran. Diese neuen Technologien verändern das Layout des Fabriknetzwerks erheblich und erzwingen eine enge Integration mit der Infrastruktur des Rechenzentrums, um Anwendungen und Dienste flexibel zu integrieren. Durch die Einführung einer sogenannten Edge-Fog-Cloud-Computing-Umgebung gehen Fabriken bei der Verteilung der Rechenlast bereits voran. Dieses riesige verteilte System stützt sich auf das Netz als hochleistungsfähiges, zuverlässiges Backbone für den Datenaustausch.

Trotz dieser neuen Nachfrage berücksichtigen die bestehenden Planungsprozesse nur selten neue Anwendungen, die auf dem Einsatz von maschinellem Lernen (ML - machine learning) beruhen, und deren Auswirkungen auf das Netz. Intelligente Roboter oder der Einsatz von Augmented Reality (AR) stützen sich zum Beispiel stark auf Machine Learning-Konzepte. Solche Anwendungen sind auf leistungsstarke Rechenhardware angewiesen, zum Beispiel leistungsstarke CPUs oder Industrie-PCs mit GPUs, die normalerweise nicht direkt auf den Geräten, wie zum Beispiel Roboterarmen, verfügbar ist. Bei der Planung von Fabriken müssen die Anforderungen von Anwendungen, die das maschinelle Lernen nutzen, berücksichtigt werden, indem entweder Netzwerkumgebungn eingeführt werden, um die höhere Last zu bewältigen, oder indem die Flexibilität für zukünftige Erweiterungen berücksichtigt wird.

Das Problem dabei ist, dass die Auswirkungen einer unsachgemäßen Planung für neue Machine Learning-basierte Anwendungen, wie beispielsweise intelligente Roboter oder Augmented Reality, können schnell zu einer Verschlechterung der Datenqualität führen, wenn Systeme die gesamte Fabrik und darüber hinaus skalieren. Diese Verschlechterung behindert die Leistung von Anwendungen, die das maschinelle Lernen nutzen, bei der ordnungsgemäßen Verarbeitung der eingehenden Daten.

Bestehende Forschungen konzentrieren sich bereits auf die Eignung neuer Netzwerkumgebungn für sogenannte Data Centre Networks (DCN) und typische Rechenzentrumsanwendungen, wie beispielsweise Hadoop oder verteilte Speichersysteme. Darüber hinaus ist eine vollständige Planung der Infrastruktur bisher selten durchgeführt.

Trotz dieser Bemühungen gibt es noch kein Werkzeug oder Konzept im Stand der Technik, das untersucht, wie sich Netzwerkumgebungen auf künftige industrielle Anwendungen auswirken, die auf maschinellem Lernen beruhen, und wie die Netze zu dimensionieren sind, die den Anforderungen Machine Learning-basierter Anwendungen in industriellen Szenarien unter Berücksichtigung verschiedener Einsatzoptionen Rechnung tragen.

Aufgabe der vorliegenden Erfindung ist es, ein Verfahren, ein Computerprogrammprodukt, ein computerlesbares Speichermedium sowie ein Planungssystem zu schaffen, mittels welchen vorteilhaft eine Netzwerkumgebung unter Verwendung von Anwendungen auf Basis von maschinellem Lernen bestimmt werden kann. Diese Aufgabe wird durch ein Verfahren, ein Computerprogrammprodukt, ein computerlesbares Speichermedium sowie ein Planungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Netzwerkumgebung für eine Infrastrukturumgebung mittels eines Planungssystems. Es werden benötigte Anwendungen in der Infrastrukturumgebung vorgegeben, wobei die Anwendungen auf maschinellem Lernen basieren, mittels einer elektronischen Recheneinrichtung. Es erfolgt das Vorgeben eines jeweiligen maschinellen Lernmodells für eine jeweilige Anwendung mittels der elektronischen Recheneinrichtung. Es wird eine jeweilige Datenanalyse für ein jeweiliges maschinelles Lernmodell mittels der elektronischen Recheneinrichtung durchgeführt, wobei mittels der Datenanalyse eine Qualität des maschinellen Lernmodells in Abhängigkeit von jeweiligen Eingangsdaten für das maschinelle Lernmodell bestimmt wird. Es erfolgt das Bestimmen der Netzwerkumgebung in Abhängigkeit von der Datenanalyse auf Basis eines Optimierungsverfahrens mittels der elektronischen Recheneinrichtung.

Insbesondere ist somit ein Planungs- und Dimensionierungsverfahren sowie ein Optimierungskonzept vorgeschlagen, das darauf abzielt, dass maschinelle Lern-Anwendungen und sogenannte Data Centre Networks (DCN) für die Infrastrukturumgebung von morgen zusammengebracht werden können.

Dabei ist ein mehrstufiges Verfahren zur Planung zukünftiger Infrastrukturen vorgesehen unter der Berücksichtigung von vergebenen Netzwerktopologien. Das Verfahren berücksichtigt neue Anwendungsfälle in Fabriken und den daraus resultierenden Bedarf an zukünftigen industriellen Anwendungen, die maschinelles Lernen nutzen, um das Verhalten dieser Modelle in der Fabrikumgebung genau zu simulieren. Das Verfahren optimiert auch ein Fabriklayout und die Ressourcenzuweisung, um den maschinellen Lernmodellen gerecht zu werden. So können die Planer potentielle Engpässe erkennen und den Fabrikfluss optimieren. Eine ordnungsgemäße Planung erhöht die Effizienz und senkt die Kosten für den Betrieb des Netzwerks und der Rechenumgebung.

Durch die Integration von maschinellem Lernen und DCN in den Planungsprozess bietet das vorgeschlagene Verfahren eine Methode und ein Optimierungskonzept, das die Planung flexibler Fabriklayouts ermöglicht. Solche Layouts sind besser für die Herausforderung der modernen Fertigung, wie zum Beispiel intelligente Roboter oder Augmented Reality, gerüstet als heutige Fabriklayouts, zum Beispiel statische Ringlayouts. Darüber hinaus kann die Nachfrage von Kunden nach Planungswerkzeugen bedient werden, die die neuen Bereitstellungsoptionen für die Ausführung von Software integrieren können, das heißt von Edge Deployments über industrielle Rechenzentren bis hin zur Nutzung von Cloud-Ressourcen. Das Verfahren verändert die Art und Weise, wie Fabriken entworfen und betrieben werden können, und führt zu höherer Produktivität, niedrigeren Kosten, besserer Flexibilität und engerer Integration, um insbesondere industrielle Fabriknetzwerke für maschinelles Lernen zu entwerfen.

Insbesondere schlägt somit die Erfindung vor, dass zum Einen eine Analyse der maschinellen Lern-Anforderungen industrieller Machine Learning-Anwendungen durchgeführt wird und zum anderen werden diese Informationen dann wiederum zur Bewertung und Dimensionierung einer gegebenen Netzwerkumgebung in einem Optimierungskonzept verwendet.

Unter einer Netzwerkumgebung können insbesondere elektronische Recheneinrichtungen verstanden werden, die in einem lokalen Netzwerk miteinander verbunden sind. Durch das erfindungsgemäße Verfahren kann somit beispielsweise ermittelt werden, auf welcher der elektronischen Recheneinrichtung die maschinelle Lernanwendung ausgeführt wird.

Gemäß dem Verfahren werden somit die maschinellen Lern-Anwendungen der realen Welt analysiert und berücksichtigt. Es kann jede beliebige Netzwerkumgebung unter Berücksichtigung der Anforderungen des maschinellen Lernens dimensioniert beziehungsweise geplant werden. Ferner ist das Verfahren zur Bewertung von Rechenzentrumstopologien für industrielle Fabrikszenarien anwendbar. Des Weiteren ist das Verfahren zur Planung von Rechenressourcen für Edge-, Fog- und Cloud-Einsätze in industriellen Fabrikszenarien anwendbar. Ferner besteht die Möglichkeit, jede beliebige Kombination von maschinellen Lern-Anwendungen und Netzlayout zu bewerten. Des Weiteren ist ein gestraffter Prozess vorgeschlagen, der neue und künftige Anforderungen an die Netzkonfiguration berücksichtigt.

Mittels des vorgeschlagenen Verfahrens kann somit eine verbesserte Leistung von Anwendungen von maschinellem Lernen bereitgestellt werden, da die Netzwerkdimensionierung Optionen für die Bereitstellung von maschinellem Lernen enthält. Des Weiteren kann eine schnellere Netzplanung für bestehende Anforderungen durchgeführt werden. Ferner sind ein Werkzeug und ein Konzept vorgeschlagen, die die Integration neuer Anforderungen und damit eine kürzere Planungszeit, wenn auch Anforderungen berücksichtigt werden, realisiert. Ferner sind geringe Infrastrukturkosten zu verzeichnen, da die Rechen- und Verbindungskapazitäten nach dem tatsächlichen Bedarf gemessen werden. Auch ein verbesserter Fabrikdurchsatz durch die gemeinsame Dimensionierung des Netzwerklayouts und der Rechenressourcen unter Berücksichtigung der Anforderungen von den maschinellen Lern-Anwendungen kann verzeichnet werden.

Gemäß einer vorteilhaften Ausgestaltungsform wird zum Durchführen der Datenanalyse das vorgegebene maschinelle Lernmodell mittels Daten unterschiedlicher Qualität trainiert. Insbesondere kann somit bereits im Trainingsprozess eine entsprechende Datenanalyse durchgeführt werden, wobei hierbei als Ergebnis insbesondere eine Qualitätsausgabe des trainierten Modells entsteht, auf Basis der Daten mit unterschiedlicher Qualität. Somit kann beispielsweise eine Simulation des Trainingsprozesses durchgeführt werden mit Daten unterschiedlicher Qualität. Dementsprechend kann beispielsweise dann in einem nachgelagerten Prozess vorgegeben werden, dass das Trainingsmodell mindestens eine vorgegebene Qualitätsstufe erreichen muss, wobei dann in Abhängigkeit dessen wiederum eine entsprechende Netzwerkumgebung bereitgestellt werden kann.

Weiterhin vorteilhaft ist, wenn zum Durchführen der Datenanalyse in das trainierte Modell Daten unterschiedlicher Qualität eingespeist werden. Somit kann das trainierte Modell bezüglich der Eingangsdaten und deren Qualität entsprechend bewertet werden. Insbesondere kann dann vorgesehen sein, dass auf Basis eines vorgegebenen Qualitätswerts für die Eingangsdaten das trainierte Modell simuliert werden kann. Somit kann zuverlässig die Netzwerkumgebung bestimmt werden.

Eine weitere vorteilhafte Ausgestaltungsform sieht vor, dass zum Durchführen der Datenanalyse eine Genauigkeit in Abhängigkeit von einer für die Inferenz verwendete Qualität sowie entsprechende Rechenressourcenanforderungen erfasst wird. Insbesondere erfolgt somit ein Erfassen der Genauigkeit in Abhängigkeit von der für die Inferenz verwendeten Qualität sowie den Rechenressourcenanforderungen in Bezug auf die CPU-/GPU-Last. Dadurch können Daten erzeugt werden, die zeigen, wie sich jedes Modell verhält insbesondere bei unterschiedlicher Qualität der Eingangsdaten, sodass eine bestimmte Genauigkeit erreicht wird. Dies kann wiederum als Input für die weitere Planungs-/Dimensionierungsphase in dem Verfahren verwendet werden.

Es hat sich weiterhin als vorteilhaft erwiesen, wenn zum Durchführen der Datenanalyse Komprimierungen der Daten im maschinellen Lernmodell berücksichtigt werden. Insbesondere hängt die Genauigkeit von den maschinellen Lernmodellen in hohem Maße von der Qualität der Eingangsdaten ab. Einfluss auf die Qualität haben dabei die Art der von den Modellen erwarteten Daten, das Austauschformat und weitere Faktoren, wie zum Beispiel, ob eine Komprimierung angewandt wird und wie sich die Komprimierung auf die Qualität auswirkt, beispielsweise verlustbehaftet oder verlustfrei.

Somit können auch entsprechende Komprimierungen berücksichtigt werden, wodurch sehr zuverlässig die maschinellen Lernmodelle simuliert werden können.

Weiterhin vorteilhaft ist, wenn zum Durchführen der Datenanalyse eine Architektur des maschinellen Lernmodells und/oder ein Training des maschinellen Lernmodells berücksichtigt werden. Insbesondere spielen auch die Architektur und der Trainingsprozess der maschinellen Lernmodelle, beispielsweise ein Supervised-Learning, ein Semi-Supervised-Learning oder ein Unsupervised-Learning eine wesentliche Rolle für die endgültige Ausgabe, die nach der Inferenz erzeugt wird. All diese Faktoren führen zu einer nicht-trivialen Darstellung des endgültigen Verhaltens, wodurch die Voranalyse noch wichtiger wird. Die durch die Analyse gewonnenen Daten und Erkenntnisse ermöglichen eine genaue Nachbildung des Verhaltens der maschinellen Lern-Anwendung in der realen Welt.

Es hat sich weiter als vorteilhaft erwiesen, wenn die Netzwerkumgebung bezüglich möglicher Netzwerkknoten und/oder möglicher Netzwerkelemente und/oder möglicher Bitraten und/oder möglicher Klienten optimiert wird. Klienten können hier jegliche Hardware sein, die eine maschinelle Lernanwendung nutzt, beispielsweise Roboter, fahrerlose Transportsysteme oder auch menschliche Nutzer. Insbesondere wird somit im zweiten Schritt ein Modell verwendet, um die relevanten Komponenten und Eigenschaften der Infrastruktur zu abstrahieren, die die Machine-Learning-Anwendungen in der realen Infrastruktur beherbergt und ausführt. Die Netzwerkumgebung ist dabei insbesondere aus Netzwerkknoten (C) Netzwerkelementen (N), wie beispielsweise Server oder Switches, Klienten (U) Bitraten (B) und die maschinellen Lern-Anwendungen (M) ausgebildet. Zusammen mit den aus der entsprechenden Datenanalyse gewonnenen Daten kann das Optimierungsproblem formuliert werden, um die Netzwerkumgebung zu bewerten. Somit kann umfassend die Netzwerkumgebung über das Optimierungsverfahren entsprechend bestimmt werden.

Eine weitere vorteilhafte Ausgestaltungsform sieht vor, dass das Optimierungsproblem mittels eines Pareto-Optimierungsalgorithmus optimiert wird. Bei der Pareto-Optimierung, welche auch als mehrkriterielle Optimierung, multikriterielle Optimierung oder Vektoroptimierung bezeichnet werden kann, handelt es sich um das Lösen eines Optimierungsproblems mit mehreren Zielen, also eines mehrkriteriellen oder multikriteriellen Problems. Bei der Pareto-Optimierung handelt es sich um ein Optimierungsproblem mit der Eigenschaft, dass kein Ziel verbessert werden kann, ohne ein anderes Ziel zu verschlechtern. Somit kann mittels der Pareto-Optimierung zuverlässig die Netzwerkumgebung bestimmt werden.

Weiterhin vorteilhaft ist, wenn mittels des Optimierungsalgorithmus ein Pfad-Fluss-Modell erzeugt wird. Mittels des Pfad-Fluss-Modells kann somit zuverlässig die Netzwerkumgebung bereitgestellt werden.

Ebenfalls vorteilhaft ist, wenn auf Basis des Pfad-Fluss-Modells eine Positionierung einer jeweiligen Anwendung in dem Pfad bestimmt wird. Somit ist es ermöglicht, dass zuverlässig auf Basis des Pfad-Fluss-Modells die Positionierung der jeweiligen Anwendung bestimmt wird, wodurch wiederum zuverlässig die Netzwerkumgebung entsprechend bestimmt werden kann.

Eine weitere vorteilhafte Ausgestaltungsform sieht vor, dass die Netzwerkumgebung bezüglich ihrer Latenzzeit innerhalb der Infrastrukturumgebung optimiert wird. Insbesondere die Latenzzeit stellt bei der Optimierung eines der Kern-Probleme dar. Insbesondere ist die Latenzzeit ein sogenannter KPI (Key Performance Indicator). Eine geringe Latenzzeit bedeutet eine schnelle Reaktion der maschinellen Lern-Anwendung. In Bezug auf beispielsweise das Szenario einer automatischen Sortierung bedeutet dies einen höheren Durchsatz an Werkstücken, da die Zeit zwischen dem Senden der Daten einen Rechenknoten und den Empfang der Klassifizierungsaufgabe kürzer ist. Die Gewichte für die Rechenkosten, die Bandbreite und die anfänglichen Kosten sind gleich, aber von geringerem Wert. Somit kann eine verbesserte Netzwerkumgebung für eine Infrastrukturumgebung bereitgestellt werden.

Eine weitere vorteilhafte Ausgestaltungsform sieht vor, dass die Netzwerkumgebung bezüglich einer minimalen Ressourcennutzung von Rechenkapazität innerhalb der Infrastrukturumgebung optimiert wird. Insbesondere bieten Netzwerkknoten entsprechend höhere Kosten und höhere Latenzen. Somit ist es vorteilhaft, wenn die Netzwerkumgebung entsprechend mit der minimalen Ressourcennutzung bereitgestellt wird. Ferner sind unnötige Überlastungen und Verbindungen auf Basis der geringen Anzahl von Netzwerkverbindungen zu vermeiden. Jedoch ist es von entscheidender Bedeutung, dass die Netzwerkknoten entsprechend derart bereitgestellt werden, dass diese die gegebenen Ressourcenanforderungen aller laufenden maschinellen Lernmodelle erfüllen können. Somit kann zuverlässig die Netzwerkumgebung bestimmt werden.

Bei dem vorgestellten Verfahren handelt es sich um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung auch ein computerlesbares Speichermedium mit dem Computerprogrammprodukt.

Ein nochmals weiterer Aspekt der Erfindung betrifft ein Planungssystem zum Bestimmen einer Netzwerkumgebung für eine Infrastrukturumgebung, mit zumindest einer elektronischen Recheneinrichtung, wobei das Planungssystem zum Durchführen eines Verfahrens nach dem vorhergehenden Aspekt ausgebildet ist. Insbesondere wird das Verfahren mittels des Planungssystems durchgeführt.

Vorteilhafte Ausgestaltungsformen des Verfahrens sind als vorteilhafte Ausgestaltungsformen des Computerprogrammprodukts, des computerlesbaren Speichermediums sowie des Planungssystems anzusehen. Das Planungssystem weist hierzu insbesondere gegenständliche Merkmale auf, um entsprechende Verfahrensschritte durchführen zu können.

Hier und im Folgenden kann ein maschinelles Lernmodell/künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronischer Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

FIG 1     ein schematisches Blockschaltbild gemäß einer Ausführungsform einer Netzwerkumgebung;

FIG 2     ein weiteres schematisches Blockschaltbild gemäß einer Ausführungsform eines Planungssystems;

FIG 3     ein weiteres schematisches Blockschaltbild gemäß einer Ausführungsform einer bestimmten Netzwerkumgebung; und

FIG 4     ein weiteres schematisches Blockschaltbild gemäß einer Ausführungsform einer bestimmten Netzwerkumgebung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

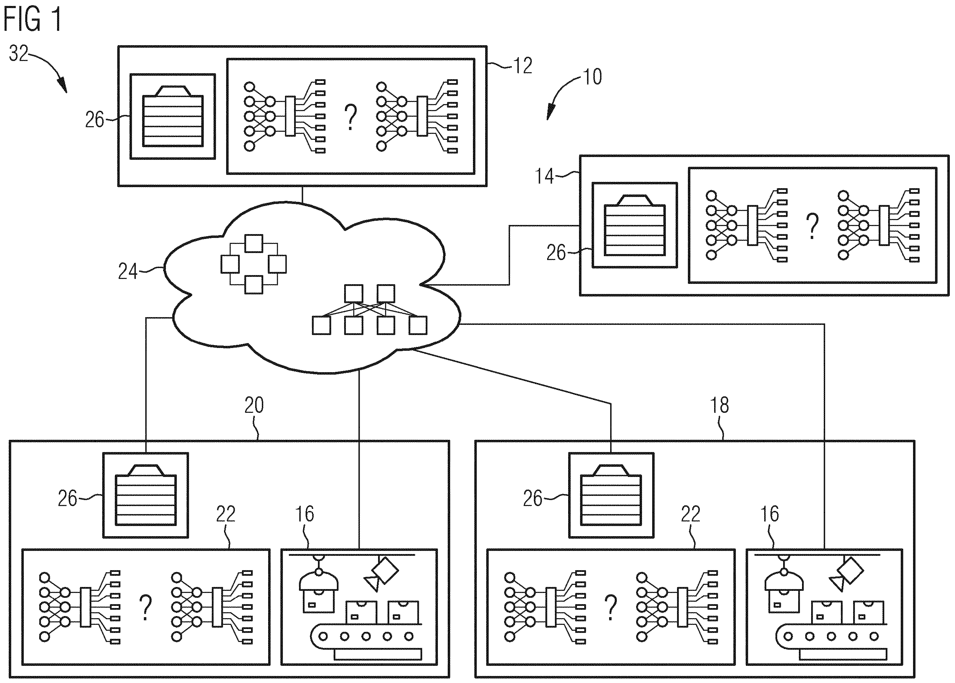

FIG 1 zeigt schematisch den Aufbau einer Netzwerkumgebung 10. Im folgenden Ausführungsbeispiel weist die Netzwerkumgebung 10 beispielsweise eine Cloudeinrichtung 12, eine Fogeinrichtung 14 sowie eine erste Edgeeinrichtung 16 sowie eine zweite Edgeeinrichtung 18 auf. Bei den Edgeeinrichtungen 16, 18 handelt es sich insbesondere um Anwendungen 20, welche auf Basis von jeweiligen maschinellen Lernmodellen 22 betrieben werden können. Beispielsweise kann es sich bei einer Anwendung 20 um einen Augmented-Reality-Device oder auch um einen intelligenten Roboterarm handeln. Die Anwendungen 20 sind insbesondere dabei über eine spezifische Netzwerktopologie 24 mit beispielsweise der Fogeinrichtung 14 und der Cloudeinrichtung 12 gekoppelt. Die Cloudeinrichtung 12, die Fogeinrichtung 14 sowie die Anwendungen 20 benötigen wiederum entsprechende Recheneinrichtungen 26, beispielsweise in Form von CPUs oder GPUs, um entsprechende Rechenaufgaben durchführen zu können.

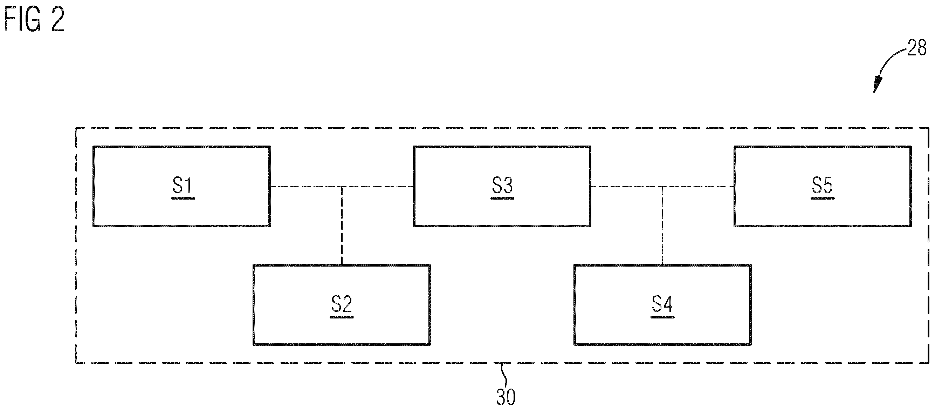

FIG 2 zeigt ein schematisches Blockschaltbild bezüglich einer Ausführungsform eines Planungssystems 28 zum Planen beziehungsweise Bestimmen der Netzwerkumgebung 10 für eine Infrastrukturumgebung 32 (Fig. 1). Hierzu weist das Planungssystem 10 zumindest eine elektronische Recheneinrichtung 30 auf. In einem ersten Schritt S1 erfolgt das Vorgeben von den benötigten Anwendungen 20 in der Infrastrukturumgebung 32, wobei die Anwendungen 20 auf maschinellem Lernen basieren, mittels der elektronischen Recheneinrichtung 30. In dem zweiten Schritt S2 werden die jeweiligen maschinellen Lernmodelle 22 für eine jeweilige Anwendung 20 mittels der elektronischen Recheneinrichtung 28 vorgegeben. In dem dritten Schritt S3 erfolgt das Durchführen einer jeweiligen Datenanalyse für ein jeweiliges maschinelles Lernmodell 22 mittels der elektronischen Recheneinrichtung 30, wobei mittels der Datenanalyse eine Qualität des maschinellen Lernmodells 22 in Abhängigkeit von jeweiligen Eingangsdaten für das maschinelle Lernmodell 22 bestimmt wird. In einem vorliegenden vierten Schritt S4 können insbesondere entsprechende Genauigkeitsfunktionen sowie Ressourcenanforderungen vorgegeben werden, welche insbesondere auf Basis der Datenanalyse durchgeführt werden. In einem fünften Schritt S5 erfolgt dann wiederum das Bestimmen der Netzwerkumgebung 10 in Abhängigkeit von der Datenanalyse auf Basis eines Optimierungsverfahrens mittels der elektronischen Recheneinrichtung 30.

Insbesondere kann dabei vorgesehen sein, dass zum Durchführen der Datenanalyse das vorgegebene maschinelle Lernmodell 22 mittels Daten unterschiedlicher Qualität trainiert wird. Ferner können zum Durchführen der Datenanalyse in das trainierte maschinelle Lernmodell 22 Daten unterschiedlicher Qualität eingespeist werden. Weiterhin ist vorgesehen, dass zum Durchführen der Datenanalyse eine Genauigkeit in Abhängigkeit von einer für die Inferenz verwendete Qualität sowie entsprechende Rechenressourcenanforderungen erfasst wird. Ferner kann vorgesehen sein, dass zum Durchführen der Datenanalyse Komprimierungen der Daten im maschinellen Lernmodell 22 berücksichtigt werden. Ebenfalls kann vorgesehen sein, dass zum Durchführen der Datenanalyse eine Architektur des maschinellen Lernmodells 22 und/oder eine Trainingsart des maschinellen Lernmodells 22 berücksichtigt werden.

Insbesondere, da die Genauigkeit von den maschinellen Lernmodellen 22 in hohem Maße von der Qualität der Eingangsdaten abhängt, ist die entsprechende Datenanalyse vorgesehen. Einfluss auf die Qualität haben die Art der von dem maschinellen Lernmodell 22 erweiterten Daten, das Austauschformat und weitere Faktoren, wie zum Beispiel ob eine Komprimierung angewandt wird und wie sich die Komprimierung auf die Qualität auswirkt, beispielsweise verlustbehaftet oder verlustfrei. Darüber hinaus spielen auch die Architektur und der Trainingsprozess der maschinellen Lernmodelle 22 eine wesentliche Rolle für die endgültige Ausgabe, die nach der Inferenz erzeugt wird. All diese Funktionen führen zu einer nicht-trivialen Darstellung des endgültigen Verhaltens, wodurch die Datenanalyse noch wichtiger ist. Durch die Analyse gewonnen Daten und Erkenntnisse ermöglichen eine genaue Nachbildung des Verhaltens der maschinellen Lernmodelle 22 in der realen Welt.

Ferner kann insbesondere vorgesehen sein, dass die Netzwerkumgebung 10 bezüglich möglicher Netzwerkknoten C und/oder mögliche Netzwerkelemente N, möglicher Bitraten B und/oder möglicher Klienten U optimiert wird. Dabei kann insbesondere vorgesehen sein, das Optimierungsproblem mittels eines Pareto-Optimierungsalgorithmus optimiert wird. Ferner kann dabei vorgesehen sein, dass mittels des Optimierungsalgorithmus ein Pfad-Fluss-Modell erzeugt wird. Ebenfalls kann vorgesehen sein, dass auf Basis des Pfad-Fluss-Modells eine Positionierung einer jeweiligen Anwendung 20 in dem Pfad bestimmt wird.

Des Weiteren ist insbesondere vorgesehen, dass die Netzwerkumgebung 10 bezüglich einer Latenzzeit innerhalb der Infrastrukturumgebung 32 optimiert wird und/oder die Netzwerkumgebung 10 bezüglich einer minimalen Anzahl an Netzwerkknoten C innerhalb der Infrastrukturumgebung 32 optimiert wird.

Insbesondere kann somit vorgesehen sein, um die relevanten Komponenten und Eigenschaften der Infrastruktur zu abstrahieren, werden die Anwendungen 20 in der realen Welt beherbergt und ausgeführt. Es besteht dabei aus den Netzwerkknoten C, Netzwerkelementen N, den Klienten U, Bitraten B und den maschinellen Lern-Anwendungen 20, welche nachfolgend auch mit dem Buchstaben M dargestellt sind. Zusammen mit der aus der Datenanalyse gewonnenen Daten kann ein Optimierungsproblem formuliert werden, um die Netzwerkumgebung 10 zu bewerten.

Das Problem wird insbesondere als multikriterielles Pfad-Fluss-Modell formuliert, das die Datenanforderungen zwischen den Klienten U und den Netzwerkknoten C realisiert. Der ausgewählte Pfad führt zur Platzierung des maschinellen Lernmodells 22.

Die Menge der Netzwerkknoten C, die maschinelle Lernmodell 22 ausführen können $C=\{c_1,c_2,...,c_o\}$. C' bezeichnet eine Teilmenge von C, die alle Netzwerkknoten enthält, die sich in der Rand- oder Nebelebene mit $C' \subset C$ befinden.

Die Menge der Klienten (Roboter, AGVs, ...), die Daten an ML-Anwendungen 20 sind $U = \{u_1, u_2, ..., u_p\}$.

Die Menge der Bitraten, mit denen die Klienten senden können ist mit $B = \{b_1, b_2, ...,b_q\}$ bezeichnet.

Die Menge der maschinellen Lernmodelle 22 ist mit $M = \{m_1,m_2,...,m_r\}$ bezeichnet.

Die Menge der Netzelemente (Router/Switches), die in der Lage sind, Daten zu empfangen/weiterzuleiten wird mit $N = \{n_1,n_2,...,n_s\}$ bezeichnet.

Die Menge der vorberechneten Pfade P zwischen allen Klienten- und Netzwerkknotenpaaren beschreibt der Graph G.

Diese Konstanten stellen das Netz als einen gewichteten Graphen G=(V, E) dar. Die Menge der Scheitelpunkte V besteht aus Klienten, Netzwerkknoten und Netzelementen $\{C \cup U \cup N\} \in V$.

Wie bereits erwähnt, kann jedes maschinelle Lernmodell 22 als Genauigkeitsfunktion G(m, b) dargestellt werden.

Diese Funktion assoziiert eine diskrete Genauigkeit für das Modell m, das Daten mit der Bitrate b empfängt. Darüber hinaus werden die erforderlichen Rechenressourcen zur Ausführung des Modells wie folgt angegeben $\varphi_m$.

Die Ausführung eines Modells m auf einem Netzwerkknoten c ist mit Rechenkosten $\rho_c$ angegeben, wie teuer es ist, die erforderlichen Ressourcen an einem bestimmten Ort bereitzustellen.

Darüber hinaus berücksichtigt das Modell die anfänglichen Kosten für die Einrichtung eines Rechenknotens $\tau_c$ sobald ein oder mehrere maschinelle Lernmodelle 22 am Netzwerkknoten c platziert werden.

$\upsilon_c$ bezeichnet eine Ressourcenkapazität für alle Netzwerkknoten $c \in C'$ wobei die Cloud als unausgelasteter Ausweichknoten fungiert.

Schließlich muss jeder Klient die Daten des maschinellen Lernmodells 22 mit einer Genauigkeit erhalten, die über $\sigma^{Acc}$.

Folgende Variablen sind dabei zu verzeichnen:

$$(1)$$

$$x_{u,c,m,b} = \begin{cases} 1 \\ 0 \end{cases}$$

if dient *u* send data at bitrate *b* to ML model *m* running on compute node *c* otherwise

$$(2)$$

$$y_{u,c,b,p} = \begin{cases} 1 \\ 0 \end{cases}$$

if dient *u* sends data at bitrate *b* to compute node *c* using path *p* otherwise

$$(3)$$

$$z_c = \begin{cases} 1 \\ 0 \end{cases}$$

if compute node *c* is used by at least one ML model otherwise

Variable (1) signalisiert die Zuordnung zwischen einem Client, seinem Modell, der Bitrate und dem entsprechenden Netzwerkknoten für die Ausführung.

Gleichung 2 fügt Informationen über den Pfad hinzu, der zur Übertragung der Daten zwischen einem Client und dem Netzwerkknoten genutzt wird.

Schließlich gibt die binäre Variable von Gleichung 3 Auskunft darüber, ob mindestens ein Klient einen Netzwerkknoten nutzt.

Für die Optimierungsumgebung ist es wichtig, einige Regeln zu befolgen, die hier aufgeführt sind

$$\sum_{c \in C} \quad \sum_{m \in M} \quad \sum_{b \in B} x_{u,c,m,b} = 1 \quad \forall u \in U \quad (4)$$

$$\sum_{c \in C} \quad \sum_{b \in B} \quad \sum_{p \in P(u,c)} y_{u,c,b,p} = 1 \quad \forall u \in U \quad (5)$$

$$\sum_{c \in C} \quad \sum_{m \in M} \quad \sum_{b \in B} G(m,b) x_{u,c,m,b} \geq \sigma^{Acc} \quad \forall u \in U \quad (6)$$

$$z_c \geq x_{u,c,m,b} \quad \forall u \in U, \forall c \in C, \forall m \in M, \forall b \in B \quad (7)$$

$$\sum_{p \in P(u,c)} \quad y_{u,c,b,p} \geq \sum_{m \in M} x_{u,c,m,b} \quad \forall u \in U, \forall c \in C, \forall b \in B \quad (8)$$

$$v_c \geq \sum_{u \in U} \quad \sum_{m \in M} \quad \sum_{b \in B} \rho_c x_{u,c,m,b} \quad \forall c \in C' \quad (9)$$

Die Gleichungen 4-5 definieren genau einen Ziel-Rechenknoten, eine Bitrate, ein Modell und einen Pfad für jeden Client. Da alle Kunden eine bestimmte Genauigkeit $\sigma^{Acc}$ benötigen, erzwingt Gleichung 6, dass diese Genauigkeiten für jeden Klienten, jedes Modell und jede Bitrate erfüllt wird. Gleichung 7 setzt die Variable $z_c$, wenn mindestens ein Klient sein Modell auf einem bestimmten Rechenknoten c ausführt. Gleichung 8 spiegelt wider, dass, wenn der Klient u einen entsprechenden Knoten c für die Ausführung auswählt, muss der entsprechende Pfad zwischen beiden verwendet werden. Zusammen mit den Nebenbedingungen Gl. 4 und Gl. 5 ergibt sich eine exakte Pfadübereinstimmung zwischen allen Client- und Rechenknotenpaaren für jeden Bitratenbedarf und Modell. Schließlich gewährleistet Gleichung 9, dass die Rechenkapazität für alle Knoten in C' nicht überschritten wird.

Die folgenden Ziele stellen wichtige Leistungsindikatoren (KPIs) für das Modell dar, um zu optimieren.

$$L = min[\sum_{u \in U} \quad \sum_{c \in C} \quad \sum_{b \in B} \quad \sum_{p \in P(u,c)} P(c,d) y_{u,c,b,p}] \quad (10)$$

$$OD = min[\sum_{u \in U} \quad \sum_{c \in C} \quad \sum_{b \in B} \quad \sum_{p \in P(u,c)} b \; y_{u,c,b,p}] \quad (11)$$

$$CC = min[\sum_{u \in U} \quad \sum_{c \in C} \quad \sum_{m \in M} \quad \sum_{b \in B} \rho_c \varphi_m x_{u,c,m,b}] \quad (12)$$

$$IC = min[\sum_{c \in C} \tau_c z_c] \quad (13)$$

Gleichung 10 minimiert die Latenzzeit für Clients, die Daten an ihren zugehörigen Netzwerkknoten senden. Zusätzlich zur Minimierung der Latenzzeit sendet Ziel 11 so wenig Daten wie möglich durch das Netz, um eine Überlastung oder unnötige Sättigung der Verbindungen zu vermeiden. Da Rechenzeit und Ressourcen teuer sind, hält Gleichung 12 die Gesamtkosten für die Berechnung so niedrig wie möglich, während Gleichung 13 sicherstellt, dass so wenige Netzwerkknoten wie möglich für die gegebenen Ressourcenanforderungen aller laufenden Modelle initialisiert werden.

Das endgültige gewichtete Ziel kombiniert alle vier Teilziele.

$$O_{multi} = min[\alpha L + \beta OD + \gamma CC + \delta IC] \quad \alpha, \beta, \gamma, \delta \in \mathbb{R}^+$$

Die Gewichtung $\alpha, \beta, \gamma, \delta$ erlauben eine Bevorzugung bestimmter KPIs, wie z.B. Latenz, in der endgültigen Lösung.

Das oben beschriebene Modell ist als gemischt-ganzzahliges lineares Programm implementiert. Das Programm kann auf jede beliebige Netzwerkumgebung 10, die als Graph vorliegt, sowie auf jede analysierte ML-Anwendung optimieren.

Nach der Optimierung gibt der Solver Kostenfunktionen für die Ziele wie Latenzzeiten oder Rechenkosten aus und legt fest, wo ML-Anwendungen auf den Rechenknoten platziert werden.

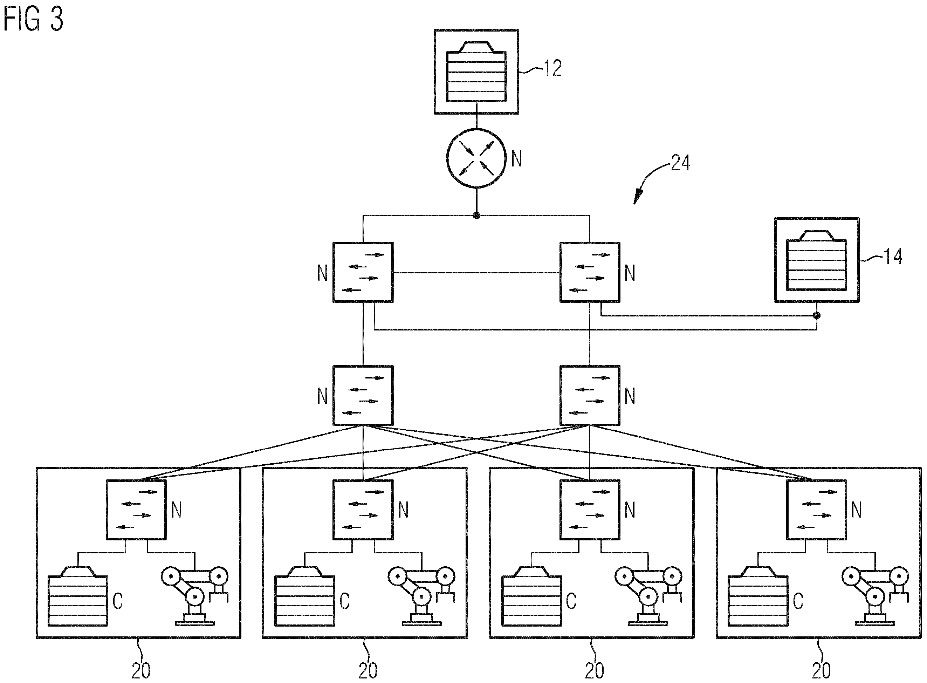

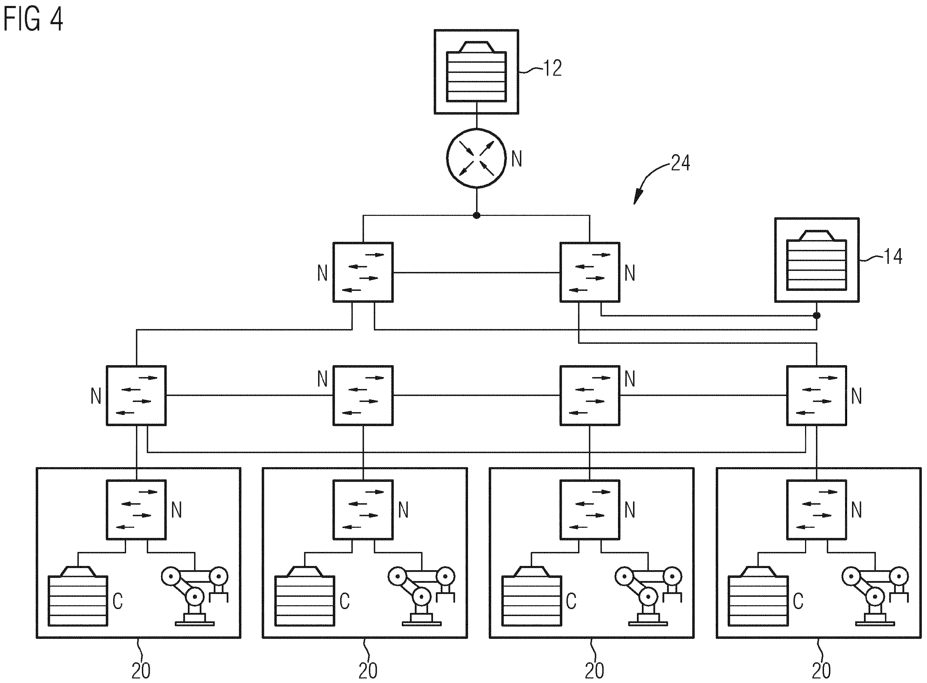

Die Fig. 3 und 4 zeigen Blockschaltbilder unterschiedlicher Netzwerkumgebungen 10, welche vorgegeben werden können. Der

Solver optimiert in der Fig. 3 auf einer Blatttopologie (leaf-spine) und in der Fig. 4 einer Ringtopologie. Jedes Netz besteht aus vier Fertigungszellen, die mit dem benachbarten Leaf-Spine oder Ring verbunden sind. In jeder Zelle wird eine variable, aber für alle Zellen gleiche Anzahl von Klienten neben einem Edge-Compute-Knoten platziert. Das Netzwerk ist dann mit einem Backbone verbunden, das die Verbindung zum Fog- und Cloud-Rechenzentrum herstellt, die jeweils über einen eigenen Netzwerkknoten verfügen. Jeder Klient wählt frei zwischen einer Sendebitrate, einem Modell und dem Netzwerkknoten, auf dem er sein maschinelles Lernmodell 22 ausführt.

Alle Pfade zwischen Klienten und Netzwerkknoten werden im Voraus berechnet, um den Lösungsprozess zu beschleunigen und die Latenz zu verringern. Die Summe der Kantenlatenzen zwischen den Netzwerkknoten entlang des Pfades stellt die Latenz dar. Jede Kante des Netzwerks vor Ort hat eine Latenz von beispielsweise 1 ms, wobei die mit der Cloud verbundenen Kanten die doppelte Latenz haben.

Die Latenzzeit ist der wichtigste KPI. Eine geringere Latenzzeit bedeutet eine schnellere Reaktion der ML-Anwendung 20. In Bezug auf das Szenario der automatischen Sortierung bedeutet dies einen höheren Durchsatz an Werkstücken, da die Zeit zwischen dem Senden der Daten an den Netzwerkknoten und dem Empfang der Klassifizierungsausgabe kürzer ist. Die Gewichte für die Rechenkosten, die Bandbreite und die anfänglichen Kosten sind gleich, aber von geringerem Wert.

Der Solver wird beispielsweise neunmal durchlaufen, wobei er mit vier Klienten (einem pro Zelle) beginnt und die Anzahl nach jedem Durchlauf verdoppelt, um schließlich 1024 Klienten zu erreichen. Dieses Verfahren wird für beide Netzwerkumgebungen 10 getrennt durchgeführt.

**Patentansprüche**

1. Verfahren zum Bestimmen einer Netzwerkumgebung (10) für eine Infrastrukturumgebung (32) mittels eines Planungssystems (28), mit den Schritten:

   - Vorgeben von benötigten Anwendungen (20) in der Infrastrukturumgebung (32), wobei die Anwendungen (20) auf maschinellen Lernen basieren, mittels einer elektronischer Recheneinrichtung (30) des Planungssystems (28);
   - Vorgeben eines jeweiligen maschinellen Lernmodells (22) für eine jeweilige Anwendung (20) mittels der elektronischen Recheneinrichtung (30);
   - Durchführen einer jeweiligen Datenanalyse für ein jeweiliges maschinelle Lernmodell (22) mittels der elektronischen Recheneinrichtung (30), wobei mittels der Datenanalyse eine Qualität des maschinellen Lernmodells (22) in Abhängigkeit von jeweiligen Eingangsdaten für das maschinelle Lernmodell bestimmt wird; und
   - Bestimmen der Netzwerkumgebung (10) in Abhängigkeit von der Datenanalyse auf Basis eines Optimierungsverfahrens mittels der elektronischen Recheneinrichtung (30).

2. Verfahren nach Anspruch 1, **dadurch gekennzeichnet, dass** zum Durchführen der Datenanalyse das vorgegebene maschinelle Lernmodell (22) mittels Daten unterschiedlicher Qualität trainiert wird.

3. Verfahren nach Anspruch 2, **dadurch gekennzeichnet, dass** zum Durchführen der Datenanalyse in das trainierte maschinelle Lernmodell (22) Daten unterschiedlicher Qualität eingespeist werden.

4. Verfahren nach Anspruch 3, **dadurch gekennzeichnet, dass** zum Durchführen der Datenanalyse eine Genauigkeit in Abhängigkeit von einer für die Inferenz verwendete Qualität sowie entsprechenden Rechenressourcenanforderungen erfasst wird.

5. Verfahren nach einem der vorhergehenden Ansprüche, **dadurch gekennzeichnet, dass** zum Durchführen der Datenanalyse Komprimierungen der Daten im maschinellen Lernmodell (22) berücksichtigt werden.

6. Verfahren nach einem der vorhergehenden Ansprüche, **dadurch gekennzeichnet, dass** zum Durchführen der Datenanalyse eine Architektur des maschinellen Lernmodells (22) und/oder eine Trainingsart des maschinellen Lernmodells (22) berücksichtigt werden.

7. Verfahren nach einem der vorhergehenden Ansprüche, **dadurch gekennzeichnet, dass** die Netzwerkumgebung (10) bezüglich möglicher Netzwerkknoten (C) und/oder möglicher Netzwerkelemente (N) und/oder möglicher Bitraten und/oder möglicher Klienten optimiert wird.

8. Verfahren nach einem der vorhergehenden Ansprüche, **dadurch gekennzeichnet, dass** das Optimierungsproblem mittels eines Pareto-Optimierungsalgorithmus optimiert wird.

9. Verfahren nach Anspruch 8, **dadurch gekennzeichnet, dass** mittels des Optimierungsalgorithmus ein Pfad-Fluss-Modell erzeugt wird.

10. Verfahren nach Anspruch 9, **dadurch gekennzeichnet, dass** auf Basis des Pfad-Fluss-Modells eine Positionierung einer jeweiligen Anwendung (20) in dem Pfad bestimmt wird.

11. Verfahren nach einem der vorhergehenden Ansprüche, **dadurch gekennzeichnet, dass** die Netzwerkumgebung (10) bezüglich einer Latenzzeit innerhalb der Infrastrukturumgebung (32) optimiert wird.

12. Verfahren nach einem der vorhergehenden Ansprüche, **dadurch gekennzeichnet, dass** die Netzwerkumgebung (10) bezüglich einer minimalen Ressourcennutzung von Rechenkapazität innerhalb der Infrastrukturumgebung (32) optimiert wird.

13. Computerprogrammprodukt mit Programmcodemitteln, welche eine elektronische Recheneinrichtung (30) dazu veranlassen, wenn die Programmcodemittel von der elektronischen Recheneinrichtung (30) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Planungssystem (28) zum Bestimmen einer Netzwerkumgebung (10) für eine Infrastrukturumgebung (32), mit zumindest einer elektronischen Recheneinrichtung (30), wobei das Planungssystem (28) zum Durchführen eines Verfahrens nach einem der Ansprüche 1 bis 12 ausgebildet ist.

FIG 1

FIG 2

FIG 3

FIG 4

EP 4 521 305 A1

**Europäisches Patentamt**
**European Patent Office**
**Office européen des brevets**

## EUROPÄISCHER RECHERCHENBERICHT

Nummer der Anmeldung

EP 23 19 6203

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LI JIAXIN ET AL: "AI Service Placement for Multi-Access Edge Intelligence Systems in 6G", IEEE TRANSACTIONS ON NETWORK SCIENCE AND ENGINEERING, IEEE, Bd. 10, Nr. 3, 12. Dezember 2022 (2022-12-12), Seiten 1405-1416, XP011939544, DOI: 10.1109/TNSE.2022.3228815 [gefunden am 2022-12-13] * Zusammenfassung * * Abbildung 1 * * Abschnitte I.C, II und III * ----- | 1-15 | INV. G06N5/01 G06N20/00 H04L41/14 |
| A | YU WANLI ET AL: "Combination of Task Allocation and Approximate Computing for Fog-Architecture-Based IoT", IEEE INTERNET OF THINGS JOURNAL, IEEE, USA, Bd. 8, Nr. 9, 26. November 2020 (2020-11-26), Seiten 7638-7648, XP011851521, DOI: 10.1109/JIOT.2020.3040892 [gefunden am 2021-04-22] * Abbildung 1 * * erster Aufzählungspunkt auf der Seite 7639 * ----- | 9,10 | RECHERCHIERTE SACHGEBIETE (IPC) G06N H04L |

Der vorliegende Recherchenbericht wurde für alle Patentansprüche erstellt

| Recherchenort | Abschlußdatum der Recherche | Prüfer |
|---|---|---|
| Den Haag | 22. Februar 2024 | Theissing, Simon |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
    Dokument

EPO FORM 1503 03.82 (P04C03)